**Europäisches Patentamt**

**European Patent Office**

**Office européen des brevets**

(19)

(11) Veröffentlichungsnummer: **0 001 379**
**B1**

(12) **EUROPÄISCHE PATENTSCHRIFT**

(21) Anmeldenummer: **78100002.1**

(22) Anmeldetag: **01.06.78**

(51) Int. Cl.³: **F 16 D 65/02,**
**F 16 D 51/24, F 16 D 65/56**

(54) **Trommelbremse**

(30) Priorität: **15.09.77 DE 2741472**

(43) Veröffentlichungstag der Anmeldung:
**18.04.79 Patentblatt 79/08**

(45) Bekanntmachung des Hinweises auf die Patenterteilung:
**23.07.80 Patentblatt 80/15**

(84) Benannte Vertragsstaaten:
**FR GB NL SE**

(56) Entgegenhaltungen:
**DE - A - 2 257 520**
**US - A - 2 492 934**
**US - A - 2 506 084**

(73) Patentinhaber: **Adam Opel Aktiengesellschaft**
**Postfach**
**D - 6090 Rüsselsheim (DE)**

(72) Erfinder: **Guthmann, Herbert**
**Im Attich 23**
**D - 6094 Bischofsheim (DE)**
**Oppelt, Werner**
**Schweriner Strasse 5**
**D - 6097 Trebur-Astheim (DE)**

Courier Press, Leamington Spa, England.

Trommelbremse

Die Erfindung bezieht sich auf eine Trommelbremse mit von einem Radbremszylinder gegen die Bremstrommel andrückbaren Bremsbacken, die unter der Wirkung einer Rückzugfeder stehen, die die Bremsbacken von der Trommel weg bewegt und die zusammen mit einer Nachstellvorrichtung in einem Raum zwischen dem Radbremszylinder und der Radachse untergebracht ist.

Der Raum zwischen dem Radbremszylinder und der Radachse ist sehr beschränkt und die Unterbringung einer üblichen Schraubenfeder als Rückzugfeder bereitet daher meist Schwierigkeiten. Insbesondere sind es aber nur jeweils an bestimmten Stellen vorspringende Teile, die das Vorsehen einer Feder erschweren, die auf ihre gesamte Länge einen gleichmäßigen, entsprechend großen Durchmesser besitzt.

Man hat daher bereits, wie es die DE - PS 1 043 837 zeigt, die Feder mit zwei Windungsabschnitten versehen, die an den Stellen liegen, wo dafür Platz vorhanden ist, während da, wo wenig Platz durch ein vorspringendes Teil vorhanden ist, lediglich ein die beiden Windungsabschnitte verbindender geradlinig verlaufender Drahtabschnitt vorgesehen ist.

Solche Federn mit mehreren Windungsabschnitten sind jedoch teuer und abgesehen davon, daß es auch nicht immer einfach ist, auf diese Weise und unter den gegebenen Umständen die gewünschte Federcharakteristik zu erhalten, bietet sich auch nicht immer der notwendige Platz dafür. Eine Bügelfeder entsprechend dem DE - GM 1 869 643 zu verwenden, ist ebenfalls teuer und hat zur Folge, daß bei wahlweiser Verwendung von automatischer und manueller Nachstellung unterschiedliche Bremsbacken und Hebel notwendig sind.

Durch die US - PS 2 506 084 ist es auch bekanntgeworden, eine mäanderförmige Feder als Zugfeder zwischen zwei Bremsbacken vorzusehen. Diese Feder befindet sich jedoch nicht in dem Raum zwischen Radbremszylinder und Radachse und ihre Windungsschenkel liegen dicht aneinander.

Der Erfindung liegt die Aufgabe zugrunde, eine Rückzugfeder zu schaffen, die die Nachteile der bekannten Rückzugfedern nicht aufweist. Die erfindungsgemäße Rückzugfeder ist kostenmäßig günstig, ihre Federkennung einfach variierbar, d. h. festlegbar und außerdem ermöglicht es die Feder, räumlich im Weg liegende Teile leicht zu umgehen. Der Oberflächenschutz ist dabei problemloser auftragbar als bei Schraubenfedern.

Erfindungsgemäß ist die Rückzugfeder von einem in einer Ebene parallel zur Radachse verlaufenden mäanderförmigen Flachfederstreifen gebildet und die Mäanderform weist eine Windung auf, deren Schenkel einen solchen Abstand voneinander aufweisen, daß zwischen ihnen Platz für den Eingriff eines benachbarten Teiles verbleibt. Ein solches Teil kann z. B. das Ritzel einer aus einer Gewindestange und einer Hülse bestehenden automatischen Nachstellvorrichtung sein. Der im Durchmesser über die Hülse hinausragende Teil des Ritzels greift zwischen den beiden Schenkeln der Windung in die Rückzugfeder ein, so daß also der größere Durchmesser des Ritzels platzmäßig nicht berücksichtigt werden muß.

Ein weiteres in den Bereich der Rückzugfeder kommendes Teil stellt z. B. die Sockelplatte des Radbremszylinders dar. Um auch dafür den Vorteil der Erfindung auszunutzen, wird weiterhin vorgeschlagen, daß in der Rückzugfeder eine der ersten Windung etwa entsprechende zweite Windung vorgesehen ist.

Für die Federkennung ist zunächst der Querschnitt des Blattfederstreifens ausschlaggebend bzw. das Verhältnis der Seiten des Querschnittes, wobei auf die Lebensdauer Rücksicht genommen werden muß, die bei der erfindungsgemäßen Rückzugfeder sehr hoch ist. Unter Berücksightigung dessen wird es als vorteilhaft angesehen, wenn der Querschnitt des Flachfederstreifens ein Seitenverhältnis von etwa 1:10 besitzt.

Die Federkennung kann weiterhin dadurch festgelegt werden, daß der Abstand der äußeren Enden der Windungen, d. h. der Stege derselben von der Kraftwirkungslinie entsprechend groß ausgeführt wird. Als zweckmäßig hat sich im Verhältnis zur Breite des Flachfederstreifens herausgestellt, wenn die Breite der Rückzugfeder, d. h. die Länge der Windungsschenkel, etwa dreimal so groß als die Breite des Flachfederstreifens ist.

In der Zeichnung sind Ausführungsbeispiele der Erfindung dargestellt.

Es zeigen:

Fig. 1 eine Trommelbremse bei abgenommener Trommel,

Fig. 2 einen Schnitt nach Linie II—II in Fig. 1,

Fig. 3 einen Schnitt ähnlich dem der Fig. 2 und

Fig. 4 und 5 zwei weitere Ausführungen der Rückzugfeder.

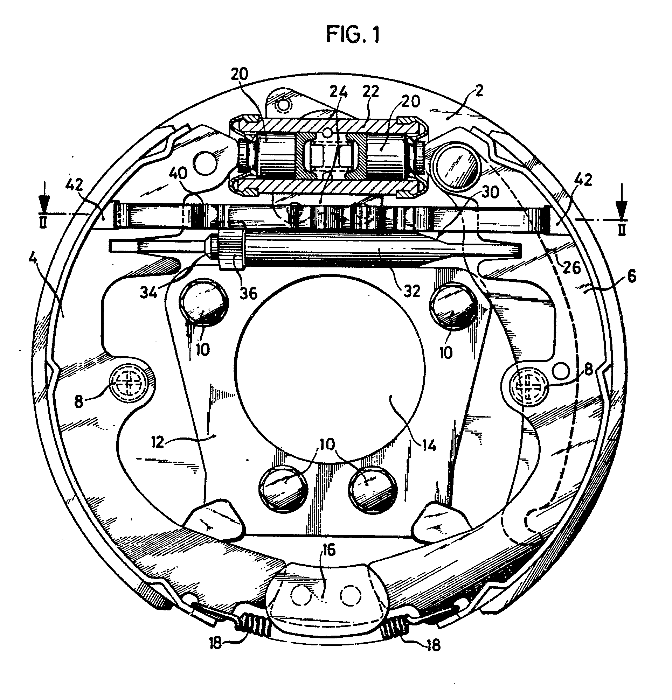

In Fig. 1 kann man, da die Bremstrommel abgenommen ist, die Bremsträgerplatte 2 ersehen, an der die Bremsbacken 4 und 6 durch die Niederhaltefedern 8 gehalten sind. Die Bremsträgerplatte 2 ist mittels Schrauben 10 am Flansch 12 eines Achsträgers befestigt. Die Bohrung 14 dient für den Durchgang des nicht dargestellten Endes der Steckwelle. Die unteren Enden der Bremsbacken 4 und 6 stützen sich an einem Widerlager 16 ab, an das sie durch die Feder 18 angedrückt werden. Die oberen Enden der Bremsbacken 4 und 6 liegen dagegen an den Kolben 20 des Radbremszylinders 22 an, der mit einer Platte 24 an der Bremsträgerplatte 2 befestigt ist. An der rechten Bremsbacke 6 ist der Handbremshebel 26 gelagert.

Zwischen dem Handbremshebel 26 und dem
Bremsbacken 4 ist die selbsttätige Nachstellvorrichtung 30 vorgesehen, die aus der Hülse
32, dem Gewindebolzen 34 und dem Ritzel 36
besteht. Die auf das Ritzel 36 einwirkenden
Teile wurden der Übersichtlichkeit halber weggelassen, da die Wirkung der Nachstellvorrichtung 30 bekannt ist.

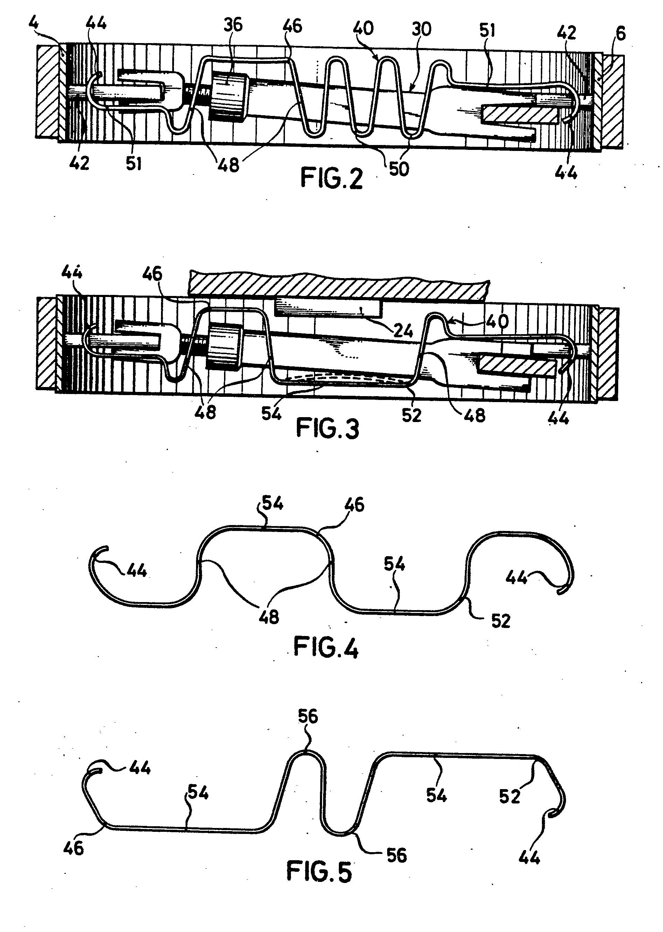

Zwischen der Nachstellvorrichtung 30 und
dem Radbremszylinder 22 ist die Rückzugfeder
angeordnet, die aus einem Flachfederstreifen
40 besteht, der mittels hakenförmigen Abbiegungen 44 in Öffnungen 42 in den Bremsbacken 4 und 6 eingehängt ist. Aus Fig. 2 geht
aus der Draufsicht auf die Rückzugfeder der
mäanderförmige Verlauf des Federstahlstreifens 40 hervor. Der Querschnitt des Federstahlstreifens 40 hat ein Seitenverhältnis von etwa
1:10. Die Mäanderform weist eine Windung 46
auf, deren Schenkel 48 einen solchen Abstand
aufweisen, daß das Ritzel 36 der Nachstellvorrichtung 30 zwischen den Schenkeln 48 in die
Rückzugfeder eingreift, wie dies die Fig. 1
erkennen läßt.

Der nach rechts an die Windung 46 anschließende Teil des Flachfederstreifens bildet
mehrere enge Windungen 50. Jeweils die letzte
Windung geht in einen gestreckten Abschnitt
51 über, an denen die Abbiegungen 44 ausgebildet sind.

Fig. 3 zeigt eine Ausbildung des Flachfederstreifens 40, bei der sich an die Windung 46
eine weitere Windung 52 anschließt, deren
Schenkel 48 einen solchen Abstand
voneinander aufweisen, daß dazwischen zum
Teil die Befestigungsplatte 24 des Radbremszylinders 20 zu liegen kommen kann.

Das Verhältnis der Breite des Flachfederstreifens 40 zur Breite der Rückzugfeder, d.h. zur
Länge eines Schenkels 48 beträgt etwa 1:3. Die
Auslegung des Flachfederstreifens 40 erfolgt
derart, daß der erforderliche Federweg bei
gleichzeitig erforderlicher hoher Rückzugskraft
ohne zu hohe Beanspruchung der Feder erreicht
wird. Der Ersatz der engen Windungen 50 durch
die breite Windung 52 bringt keine große
Änderung der Federkennung mit sich. Das
Durchbiegen des Steges 54 der Windung 52,
wie dies in Fig. 3 gestrichelt dargestellt ist,
gleicht die Federung der Windungen 50 in etwa
aus.

In Fig. 4 ist eine weitere Ausbildung der
Rückzugfeder dargestellt. Die beiden Windungen 46 und 52 sind hier gleich ausgeführt,
wobei größere Übergangsradien von den Windungsschenkeln 48 zu den Stegen 54 vorgesehen sind. Die hakenförmigen Abbiegungen
44 sind hier direkt an einem Windungsschenkel
angeformt. Bei der Ausführungsform nach Fig. 5
sind zwischen zwei breiten Windungen 46 und
52 zwei enge Windungen 56 vorgesehen. Wäre
nur eine enge Windung 56 vorgesehen, so
kämen die Stege 54 der Windungen 46 und 52 auf ein und derselben Seite der Rückzugfeder zu
liegen.

**Patentansprüche**

1. Trommelbremse mit von einem Radbremszylinder gegen die Bremstrommel andrückbaren Bremsbacken, die unter der Wirkung
einer Rückzugfeder stehen, die die Bremsbacken von der Trommel weg bewegt und die
zusammen mit einer Nachstellvorrichtung in
einem Raum zwischen dem Radbremszylinder
und der Radachse untergebracht ist, dadurch
gekennzeichnet, daß die Rückzugfeder von
einem in einer Ebene parallel zur Radachse verlaufenden mäanderförmigen Flachfederstreifen
(40) gebildet ist und die Mäanderform eine Windung (46) aufweist, deren Schenkel (48) einen
solchen Abstand voneinander aufweisen, daß
zwischen ihnen Platz für den Eingriff eines benachbarten Teiles (36) verbleibt.

2. Trommelbremse nach Anspruch 1,
dadurch gekennzeichnet, daß die Windung (46)
etwa Trapezform aufweist.

3. Trommelbremse nach Anspruch 1 und 2,
dadurch gekennzeichnet, daß eine der ersten
Windung (46) etwa entsprechende zweite Windung (52) vorgesehen ist.

4. Trommelbremse nach Anspruch 3,
dadurch gekennzeichnet, daß die Stege (54) der
beiden Windungen (46, 52) an der jeweils entgegengesetzten Seite der Rückzugfeder liegen.

5. Trommelbremse nach Anspruch 1 bis 4,
dadurch gekennzeichnet, daß der Querschnitt
des Flachfederstreifens (40) ein Seitenverhältnis von etwa 1:10 besitzt.

6. Trommelbremse nach Anspruch 1 bis 5,
dadurch gekennzeichnet, daß das Verhältnis
von Breite des Flachfederstreifens (40) zur
Länge der Windungsschenkel (48) etwa 1:3
beträgt.

**Revendications**

1. Frein à tambour comprenant des
mâchoires qui peuvent être serrées à l'aide
d'un cylindre de freinage contre le tambour et
écartés moyennant un ressort de rappel,
l'ensemble se trouvant logé avec un dispositif
d'adjustage dans l'espace entre le cylindre de
freinage et le moyen de la roue, caractérisé
par le fait que le ressort de rappel est constitué
par une lame de ressort (40) en forme de
méandre disposée dans un plan parallèle à
l'axe de la roue et présentant une boucle (46),
dont les parties latérales (48) sont suffisamment écartées pour permettre l'insertion d'un
élément mécanique (36) se trouvant à proximité.

2. Frein à tambour suivant la revendication 1,
caractérisé par le fait que la boucle (46) est à
peu près de forme trapézoidale.

3. Frein à tambour suivant les revendications 1 et 2, caractérisé par le fait que l'on
prévoit une deuxième boucle (52) correspondant à peu près à la première boucle (46).

4. Frein à tambour suivant la revendication 3, caractérisé par le fait que les parties droites (54) des deux boucles (46, 52) sont disposées de part et d'autre du ressort de rappel.

5. Frein à tambour suivant les revendications 1 à 4, caractérisé par le fait que la rapport des côtés de la section de la lame de ressort (40) est de 1:10.

6. Frein à tambour suivant les revendications 1 à 5, caractérisé par le fait que le rapport de la largeur de la lame de ressort (40) et de la longueur des parties latérales (48) d'une boucle est de l'ordre de 1:3.

## Claims

1. Drum-type brake having brake shoes which can be pressed by a wheel-brake cylinder against the brake drum and are under the action of a return spring which moves the brake shoes away from the drum and is accommodated together with an adjusting device in the space between the wheel-brake cylinder and the wheel axle, *characterised in that* the return spring is formed by a meandering flat spring strip (40) running in a plane parallel with the wheel axle, and the meandering shape has a winding (46) whose arms (48) are so distanced from each other that space for the encroachment of an adjacent part (36) remains between them.

2. Drum-type brake in accordance with claim 1, *characterised in that* the winding (46) is approximately of trapezoidal shape.

3. Drum-type brake in accordance with claim 1 and 2, *characterised in that* a second winding (52) corresponding to the first winding (46), is provided.

4. Drum-type brake in accordance with claim 3, *characterised in that* the bridge-pieces (54) of both windings (46, 52) lie respectively at opposite sides of the return spring.

5. Drum-type brake in accordance with claim 1 to 4, *characterised in that* the cross section of the flat spring strip (40) has a sides ratio of 1:10.

6. Drum-type brake in accordance with claim 1 to 5, *characterised in that* the ratio between the width of the flat spring strip (40) and the length of the arm (48) of a winding, amounts to about 1:3.

FIG. 1

FIG.2

FIG.3

FIG.4

FIG.5